# EUROPEAN PATENT APPLICATION

(11) **EP 4 567 199 A1**
(43) Date of publication of application: **11.06.2025**
(21) Application number: 23930600.4
(22) Date of filing: 30.03.2023
(51) Int. Cl.: E02F 9/00

(54) **CONSTRUCTION EQUIPMENT**

(71) Applicant: Hitachi Construction Machinery Co., Ltd., Tokyo 110-0015 (JP)
(72) Inventor: KANAZAWA,Yuuta, Tsuchiura-shi, Ibaraki 300-0013 (JP)
(74) Representative: Manitz Finsterwald Patent- und Rechtsanwaltspartnerschaft mbB
(86) International application number: PCT/JP2023/013424
(87) International publication number: WO 2024/201964

(57) **Abstract**

A construction machine includes a machine body, an electrically driven motor as a power source, a fuel cell that generates electric power to be supplied to the electrically driven motor, a battery that stores the electric power generated by the fuel cell, an inclination angle sensor that senses an inclination of the machine body, and a controller, in which the controller switches supplying of the electric power to the electrically driven motor from the fuel cell to the battery when a sensing result from the inclination angle sensor is equal to or larger than a predetermined inclination angle threshold. With this arrangement, even when the machine body is inclined, the water generated in the process of generating electric power by the fuel cell is prevented from being left undrained.

## Description

### Technical Field

The present invention relates to a construction machine mounted with a fuel cell.

### Background Art

Fuel cells mounted on construction machines such as hydraulic excavators are required to appropriately drain the water generated in their process of generating electric energy. As a technology regarding water drainage, Patent Document 1, for example, discloses a fuel cell vehicle including a fuel cell system and an exhaust structure for discharging, to the outside of the vehicle, a cathode exhaust gas that flows out from the fuel cell system. The exhaust structure includes a main exhaust pipe having a straddling portion straddling a vehicle structure member thereabove and extending from one side to the other side in the horizontal, and a water bleeding bypass pipe disposed below the vehicle structure member, branching from the main exhaust pipe at a position on the one side in the horizontal direction relative to the vehicle structure member, and connected to the main exhaust pipe at a position on the other side in the horizontal direction relative to the vehicle structure member, the water bleeding bypass pipe being thinner than the main exhaust pipe.

### Prior Art Document

### Patent Document

Patent Document 1: JP-2019-217895-A

### Summary of the Invention

### Problems to be Solved by the Invention

Work sites where construction machines operate include sloping terrains that have various gradients and sloping directions. In addition, construction machines may be required to work on slopes whose gradients are too large to consider using general automobiles thereon. Consequently, the prior art referred to above may encounter a situation in which the generated water tends to be left undrained depending on the degree of inclination of the machine body. However, if the water generated by the fuel cell remains undrained, then it may adversely affect the operation state of the fuel cell and may cause damage to a water draining mechanism when the generated water is frozen.

The present invention has been made in view of the above problems. It is an object of the present invention to provide a construction machine that is able to prevent the water generated in the process of generating electric power by a fuel cell from being left undrained even when the machine body of the construction machine is inclined.

### Means for Solving the Problems

The present application includes a plurality of means for solving the above problems. According to an example of those, a construction machine includes a machine body, an electrically driven motor as a power source, a fuel cell that generates electric power to be supplied to the electrically driven motor, a battery that stores the electric power generated by the fuel cell, an inclination angle sensor that senses an inclination of the machine body, and a controller, in which the controller is configured to switch supplying of the electric power to the electrically driven motor from the fuel cell to the battery when a sensing result from the inclination angle sensor is equal to or larger than a predetermined inclination angle threshold.

### Advantages of the Invention

According to the present invention, even when the machine body is inclined, the water generated in the process of generating electric power by the fuel cell is prevented from being left undrained.

### Brief Description of the Drawings

FIG. 1 is a side elevational view schematically illustrating the appearance of a hydraulic excavator as an example of construction machine.
FIG. 2 is a functional block diagram schematically illustrating a power supply system, which includes a fuel cell, of the hydraulic excavator together with related configurations.
FIG. 3 is a flowchart illustrating details of a power supply operation control process.
FIG. 4 is a diagram illustrating an example of time-depending changes in the state of charge of a secondary battery and in a machine body inclination angle in the power supply operation control process.

### Modes for Carrying Out the Invention

An embodiment of the present invention will be described hereinbelow with reference to the drawings. While a hydraulic excavator will be described as an example of construction machine in the embodiment, the present invention is also applicable to any of other construction machines each of which is mounted with a fuel cell.

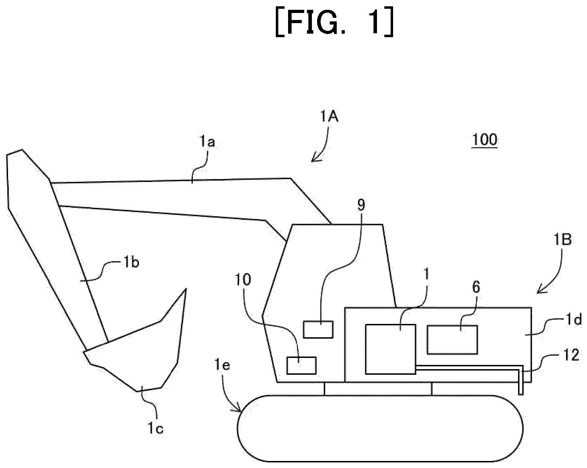

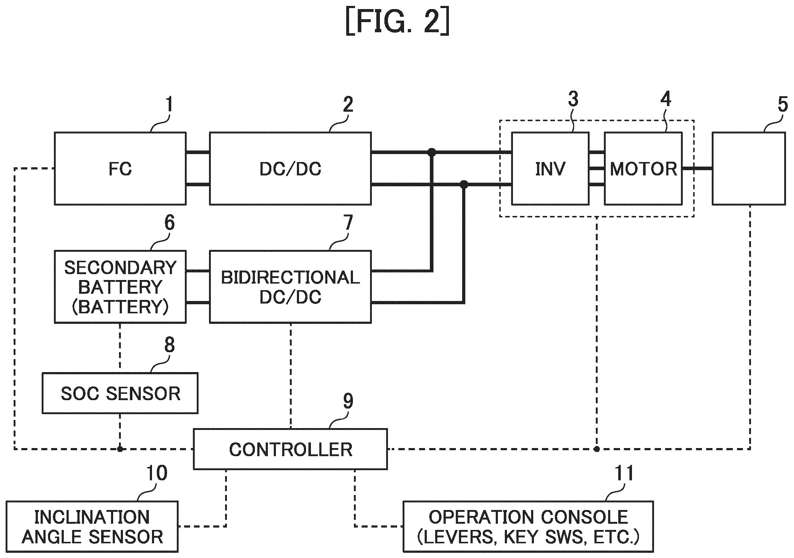

FIG. 1 schematically illustrates, in a side elevation, the appearance of a hydraulic excavator as an example of construction machine according to the present embodiment. FIG. 2 schematically illustrates, in functional block form, a power supply system, which includes a fuel cell, of the hydraulic excavator together with related configurations.

As illustrated in FIG. 1, a hydraulic excavator 100, essentially includes a machine body 1B (main construction machine body) made up of a crawler type lower track structure 1e and an upper swing structure 1d swingably mounted on the lower track structure 1e, and a work device 1A (front work implement) elevatably mounted on a front side of the upper swing structure 1d.

The work device 1a includes a multi-joint front work implement including a plurality of driven members (a boom 1a, an arm 1b, and a bucket 1c) each rotates in vertical directions. The boom 1a has a proximal end rotatably supported in upward and downward directions on the front side of the upper swing structure 1d. The boom 1a has a distal end to which one end of the arm 1b is rotatably coupled in upward and downward directions. The bucket 1c is rotatably coupled in upward and downward directions to the other end (distal end) of the arm 1b. The boom 1a, the arm 1b, and the bucket 1c are driven respectively by a boom cylinder, an arm cylinder, and a bucket cylinder provided as hydraulic actuators, not depicted.

The upper swing structure 1d includes a swing frame as a base with various members disposed thereon. The upper swing structure 1d is swingable with respect to the lower track structure 1e by being swing-driven with respect to the lower track structure 1e by the hydraulic swing motor, not depicted, as a hydraulic actuator. On the swing frame of the upper swing structure 1d, there are mounted a fuel cell 1 that generates electric power for driving the hydraulic excavator 100, a secondary battery 6 (battery) that stores the electric power generated by the fuel cell 1, an inclination angle sensor 10 that senses the inclination (gradient, sloping direction) of the machine body 1B of the hydraulic excavator 100, an electrically driven motor 4 that is driven by the electric power from the fuel cell 1 and the secondary battery 6, a hydraulic drive system 5 for driving hydraulic actuators including a hydraulic pump and a pilot pump that are driven by the electrically driven motor 4, and a controller 9 that controls the action of the hydraulic excavator 100 in its entirety.

The fuel cell 1 is a device for generating electric power from a chemical reaction between a fuel (e.g., hydrogen) and an oxidizer (e.g., oxygen). In the fuel cell 1 according to the present embodiment, air that contains oxygen (oxidizer) required to react with hydrogen (fuel) is sent into the inside of the fuel cell by an electrically driven compressor, and the air whose oxygen has been consumed by the reaction and water generated by the reaction (generated water) are discharged via an air/water drain pipe 12.

Where the fuel cell 1 is driving in a normal state, e.g., where the fuel cell 1 is generating electric power to meet the demand from the electrically driven motor 4, the generated water is expelled from the air/water drain pipe 12 under the pressure of the discharged air that has been sent in by the electrically driven compressor and whose oxygen has been consumed. Depending on the driving condition (whether the amount of generated electric power increases or decreases) of the fuel cell 1, the amount of consumed oxygen varies, and thus the amount of air sent in by the electrically driven compressor varies.

For example, with increase in the amount of electric power generated by the fuel cell 1, the amount of air sent in (and the amount of discharged air) increases. Where the fuel cell 1 is driving in a prescribed high-load state where the fuel cell 1 generates more electric power than in the normal state, the amount of air sent in by the electrically driven compressor is maximized. At this time, the amount of air discharged from the air/water drain pipe 12 is also maximized, and the amount of water generated in the process of generating electric power by the fuel cell 1 and the water draining capability thereof are also maximized.

Similarly, with decrease in the amount of electric power generated by the fuel cell 1, the amount of air sent in (and the amount of discharged air) decreases, and when the fuel cell 1 is driving in a prescribed low-idling state (low-load state) where the fuel cell 1 is in an electric power generation standby state, the amount of air sent in by the electrically driven compressor is minimized. At this time, the amount of air discharged from the air/water drain pipe 12 is also minimized, and the amount of water generated in the process of generating electric power by the fuel cell 1 and the water draining capability are also minimized.

The electric power generation standby state means a state where the fuel cell 1 is steadily driving with an amount of electric power generation of approximately 10kW in order to immediately generate electric power for meeting electric power demands while taking into consideration the fact that it takes considerable amount of time for the fuel cell 1 to generate a sufficient level of electric power from level zero. With the fuel cell 1 kept in the electric power generation standby state when it is not required to supply electric power from the fuel cell 1, the fuel cell 1 is able to generate electric power immediately to supply demanded electric power to meet all electric power demands from the hydraulic excavator 100, for example, when there is an input operation from an operating lever, when a motor rotational speed adjusting dial inputs a command for increasing the rotational speed, when an air conditioner is turned on, when LIB is charged, and when the water generated by the fuel cell 1 is purged.

As illustrated in FIG. 2, in a power supply system of the hydraulic excavator 100, the fuel cell 1 generates electric power in response to a control signal from the controller 9 and supplies the generated electric power via a DC/DC converter 2 to an inverter 3 and the secondary battery 6 (battery).

The secondary battery 6 supplies stored electric power to the inverter 3 via a bidirectional DC/DC converter 7 that operates in response to a control signal from the controller 9, and stores electric power supplied from the fuel cell 1 via the DC/DC converter 2. The secondary battery 6 is provided with an SOC sensor 8 that senses a state of charge (SOC) thereof, and the SOC sensor 8 sends a sensing result to the controller 9.

In response to a control signal from the controller 9, the inverter 3 converts the electric power supplied from fuel cell 1 and the secondary battery 6 and drives the electrically driven motor 4 with the converted electric power.

The controller 9 performs a power supply operation control process for controlling the operation of the power supply system including the fuel cell 1 and the secondary battery 6 (i.e., the bidirectional DC/DC converter 7) depending on operating signals from levers and an operation console 11 including key switches installed in a cabin disposed on a front portion of the upper swing structure 1d and sensing results from the SOC sensor 8 and the inclination angle sensor 10.

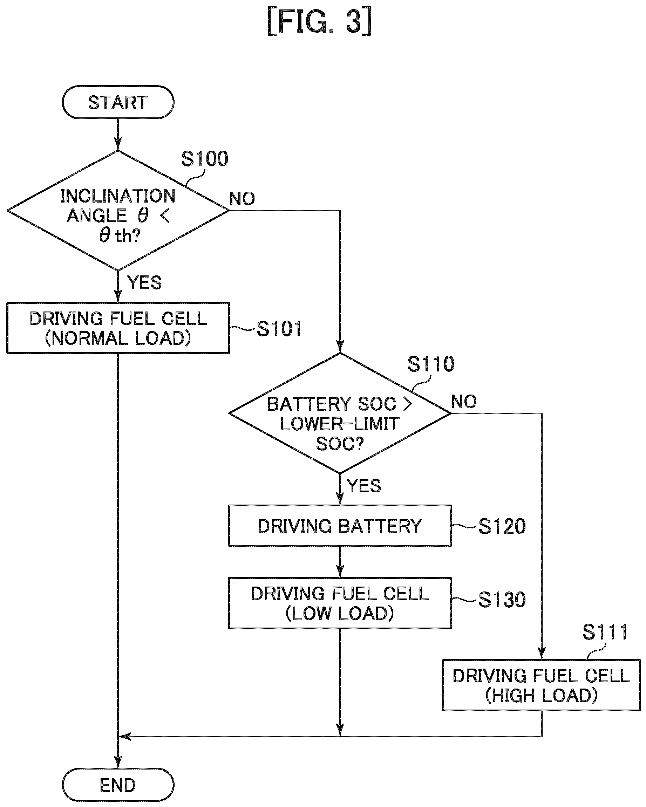

FIG. 3 is a flowchart illustrating details of the power supply operation control process.

As illustrated in FIG. 3, the controller 9 initially determines whether the sensing result from the inclination angle sensor 10, i.e., the inclination angle θ of the machine body 1B, is smaller than a predetermined inclination angle threshold θth (step S100). The inclination angle threshold θth is a threshold with which to determine whether the inclination angle of the machine body 1B, or stated otherwise, the inclination angle of the fuel cell 1, is an angle at which the generated water can sufficiently be drained by the water draining capability of the fuel cell 1 in the electric power generation standby state.

If the determined result in step S100 is YES, then the fuel cell drives under a normal load (step S101). That is, in the series of processing of steps S100 and S101, control is performed such that the hydraulic excavator 100 is driven with the electric power generated by the fuel cell 1 normally driving, while the fuel cell 1 is in the state (inclination angle) where the generated water can sufficiently be drained.

If the determined result in step S100 is NO, i.e., if it is determined that the inclination angle is such an angle that the generated water cannot sufficiently be drained by the water draining capability of the fuel cell 1 in the electric power generation standby state, then the controller 9 determines whether the state of charge of the secondary battery 6 is larger than a lower-limit SOC (state-of-charge threshold) (step S110). The lower-limit SOC is a criterion with which to determine whether the secondary battery 6 has an enough power storage ratio not disrupting the supply of electric power to the members of the hydraulic excavator 100.

If the determined result in step S110 is YES, then the electrically driven motor 4 is switched to be driven by the electric power from the secondary battery 6, i.e., a battery-driven state, (step S120), and the fuel cell 1 is switched to the electric power generation standby state (low-load state) (step S130). That is, in the series of processing of steps S100, S110, S120, and S130, while the fuel cell 1 is in the state (inclination angle) where it is unable to sufficiently drain the generated water, control is performed such that the fuel cell 1 drives in the low-load state and the amount of generated water is minimized to reduce the need for water drainage, and that the hydraulic excavator 100 is driven with the electric power from the secondary battery 6 that is in the sufficient state of charge.

If the determined result in step S110 is NO, then the fuel cell 1 drives in the high-load state (step S111). That is, in the series of processing of steps S100, S110, and S111, while the fuel cell 1 is in the state (inclination angle) where it is unable to sufficiently drain the generated water, if the hydraulic excavator 100 cannot be driven by the electric power from the secondary battery 6, then control is performed such that the fuel cell 1 drives in the high-load state to maximize the water draining capability thereof and hence to drain the generated water sufficiently, and that the secondary battery 6 is charged.

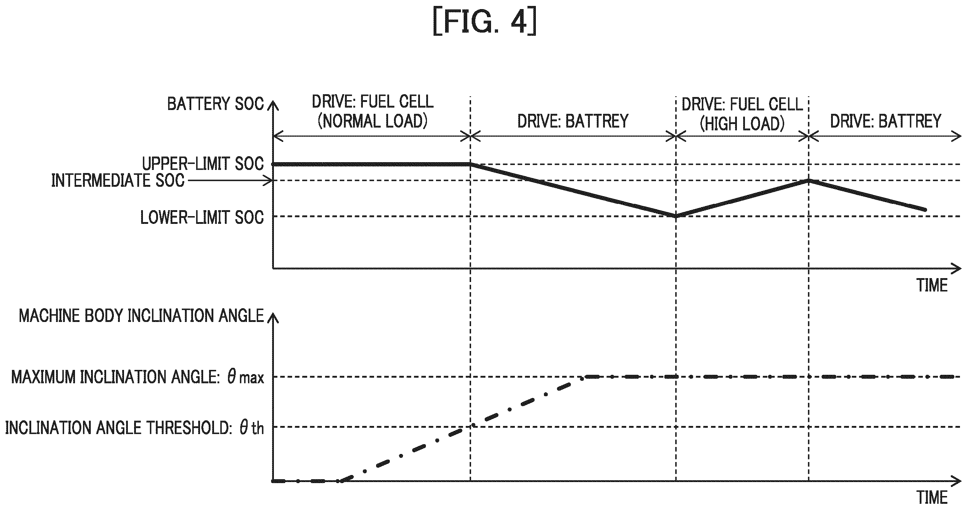

FIG. 4 is a diagram illustrating an example of time-depending changes in the state of charge of the secondary battery and the machine body inclination angle in the power supply operation control process.

As illustrated in FIG. 4, where the inclination angle of the machine body is smaller than the inclination angle threshold θth, the hydraulic excavator 100 is driven by the electric power generated by the fuel cell 1 driving in the normal state. At this time, the state of charge of the secondary battery 6 keeps a maximum value (upper-limit SOC).

If the inclination angle of the machine body gradually increases and goes beyond the inclination angle threshold θth, the fuel cell 1 is switched to the electric power generation standby state to restrain the generation of water, and the hydraulic excavator 100 is switched to be driven with the electric power from the secondary battery 6.

Even when the inclination angle of the machine body further increases until it reaches a maximum inclination angle θmax, the fuel cell 1 is in the electric power generation standby state and the hydraulic excavator 100 is driven by the electric power from the secondary battery 6. The maximum inclination angle θmax means a maximum value of the inclination angle of the machine body at which the construction machine is required to be workable, and represents 35 degrees in all directions of the machine body, for example.

When the hydraulic excavator 100 is continuously driven in the state where the inclination angle of the machine body is the maximum inclination angle θmax until the state of charge of the secondary battery 6 reaches its lower limit value (lower-limit SOC), the hydraulic excavator 100 is switched to be driven with the electric power generated by the fuel cell 1 in the high-load state, and the secondary battery 6 is charged. When the state of charge of the secondary battery 6 reaches a predetermined intermediate SOC, the fuel cell 1 is switched again to the electric power generation standby state to restrain the generation of water, and the hydraulic excavator 100 is switched to be driven with the electric power from the secondary battery 6.

Advantages of the present embodiment configured as described above will be described below.

Work sites where construction machines operate include sloping terrains that have various gradients and sloping directions. Construction machines may be required to work on slopes whose gradients are too large to consider using general automobiles thereon. Consequently, the prior art may encounter a situation where the generated water tends to be left undrained depending on the degree of inclination of the machine body. However, if the water generated by the fuel cell remains undrained, then it may adversely affect the operation state of the fuel cell and may cause damage to a water draining mechanism when the generated water is frozen.

In contrast, according to the present embodiment, there are provided the machine body 1B, the electrically driven motor 4 as a power source, the fuel cell 1 that generates electric power to be supplied to the electrically driven motor 4, the secondary battery 6 (battery) that stores the electric power generated by the fuel cell 1, the inclination angle sensor 10 that senses the inclination of the machine body 1B, and the controller 9, in which the controller 9 switches supplying of the electric power to the electrically driven motor 4 from the fuel cell 1 to the secondary battery 6 when the sensing result from the inclination angle sensor 10 is equal to or larger than the predetermined inclination angle threshold θth. When the machine body is inclined, therefore, the amount of water generated when the fuel cell 1 generates electric power is restrained. Consequently, even when the machine body is inclined, the water generated in the process of generating electric energy by the fuel cell is prevented from remaining undrained.

According to the present embodiment, it has been described by way of example that if the sensing result from the inclination angle sensor 10 is equal to or larger than the inclination angle threshold θth, the hydraulic excavator 100 is immediately switched from being driven by the fuel cell 1 to be driven by the secondary battery 6. However, the present invention is not limited to such details, but the hydraulic excavator 100 may be immediately switched to be driven by the secondary battery 6 upon elapse of a preset period of time after the sensing result from the inclination angle sensor 10 has reached the inclination angle threshold θth.

Moreover, a dead zone may be set for determination based on the inclination angle threshold θth and the state-of-charge threshold (lower-limit SOC).

Furthermore, according to the present embodiment, it has been described by way of example that the inclination angle threshold θth is used in all directions of the machine body. However, the present invention is not limited to such details, but different inclination angle thresholds may be set to be used depending on the direction of inclination.

### <Addition>

The present invention is not limited to the embodiment described above, but covers various modifications and combinations without departing from the scope thereof. Moreover, the present invention is not limited to anything that includes all the structural details described according to the above embodiment, but covers anything that includes some of the structural details. The structural details and functions described above may be realized in part or entirely by being designed with integrated circuits, for example. Moreover, the structural details and functions described above may be software-implemented by a processor that interprets and executes programs representing the functions.

### Description of Reference Characters

- 1A:: Work device
- 1B:: Machine body
- 1a:: Boom
- 1b:: Arm
- 1c:: Bucket
- 1d:: Upper swing structure
- 1e:: Lower track structure
- 1:: Fuel cell
- 2:: DC/DC converter
- 3:: Inverter
- 4:: Electrically driven motor
- 5:: Hydraulic drive system
- 6:: Secondary battery
- 7:: Bidirectional DC/DC converter
- 8:: SOC sensor
- 9:: Controller
- 10:: Inclination angle sensor
- 11:: Operation console
- 12:: Air/water drain pipe
- 100:: Hydraulic excavator

## Claims

1. A construction machine comprising:
a machine body;
an electrically driven motor as a power source;
a fuel cell that generates electric power to be supplied to the electrically driven motor;
a battery that stores the electric power generated by the fuel cell;
an inclination angle sensor that senses an inclination of the machine body; and
a controller, wherein
the controller is configured to
switch supplying of the electric power to the electrically driven motor from the fuel cell to the battery when a sensing result from the inclination angle sensor is equal to or larger than a predetermined inclination angle threshold.

2. The construction machine according to claim 1, wherein
the controller is configured
operate the fuel cell under a high load and to switch the supplying of the electric power to the electrically driven motor from the battery to the fuel cell, when a state of charge of the battery is equal to or lower than a predetermined state-of-charge threshold even if the sensing result from the inclination angle sensor is equal to or larger than the predetermined inclination angle threshold.

3. The construction machine according to claim 1, wherein
the controller is configured to
switch the supplying of the electric power to the electrically driven motor from the fuel cell to the battery after elapse of a preset period of time, when the sensing result from the inclination angle sensor is equal to or larger than the predetermined inclination angle threshold.

4. The construction machine according to claim 1 or 2, wherein
a dead zone is set for determination based on the inclination angle threshold and the state-of-charge threshold.

5. The construction machine according to claim 1, wherein
the inclination angle threshold is a limit angle at which the fuel cell is allowed to operate in a predetermined manner according to specifications thereof or an angle at which water generated by the fuel cell being operated under a low load cannot sufficiently be drained.
